# EUROPEAN PATENT APPLICATION

(11) **EP 0 776 862 A1**
(43) Date of publication of application: **04.06.1997**
(21) Application number: 96118503.0
(22) Date of filing: 19.11.1996
(51) Int. Cl.: C01B 13/20, C01B 13/22, C01G 23/07

(54) **Process for the production of nanometric metal oxide powders from metal chlorides**

(30) Priority: 24.11.1995 IT MI952452
(71) Applicant: ENEL S.p.A., I-00198 Roma (IT); CISE S.p.A., I-20020 Segrate (IT)
(72) Inventor: Malloggi, Stefano, 56122 Pisa (IT); Casale, Mariacristina, 20090 Segrate (MI) (IT); Curcio, Franco, 20090 Segrate (MI) (IT); Musci, Mirella, 20090 Segrate (MI) (IT); Notaro, Maurizio, 20090 Segrate (MI) (IT)
(74) Representative: Ferraiolo, Rossana

(57) **Abstract**

Vapours of metal chlorides are mixed with vapours of an alcohol and carried into a reaction chamber under the action of the laser beam so as to form the corresponding alcoxides that subsequently undergo a pyrolysis process, thus producing particles of powders that are well crystallized and with diameters ranging between 5 and 20 nm.

## Description

The present invention concerns a process for the production of nanometric metal oxide powders from metal chlorides.

The use of nanometric powders is especially advantageous in the preparation of solid-state materials and devices with functions primarily based on surface phenomena rather than on bulk phenomena. Important examples of the application of "nano-structured" materials are catalysis and gas sensor devices.

Generally fine oxide powders are industrially produced by means of wet-processes (precipitation from chemical solutions, solgel). However, these processes feature a number of limits and drawbacks:
- they are batch type processes and cannot be continuously operated;
- they are characterized by a large number of process steps to reach the finished product;
- they originate powders constituted by porous aggregates of particles, generally amorphous and with morphologies and compositions that are difficult to control.

Another class of processes used in the synthesis of nanometric powders are vapour phase processes, defined as "dry". These processes are more advantageous because they can operate continuously, they require a single work phase and they originate non aggregated and crystallized particles.

Among the various vapour phase processes, laser induced pyrolysis is the most suited for the synthesis of high quality powders.

In fact, the powders obtained in this way are characterized by:
- particle dimensions even less than 10 nm;
- size uniformity;
- high purity;
- controllable crystalline structure and composition.

The laser pyrolysis process for the synthesis of oxide powders consists in perpendicularly irradiating a stream containing metal organic or inorganic compounds of the desired metal and, when required, of an oxygen precursor, with a continuous emission CO₂ laser. The stream of reagents is maintained spatially localized by means of a coaxial flow of inert gas, argon for example. In the intersection region strong absorption takes place when the reagents absorb in resonance the laser radiation or when they are mixed with a gas that absorbs in resonance the laser radiation and acts as a sensitizer for the transferral of energy to the reagents. In this region high temperatures are reached and the chemical reaction leading to the formation of mono-crystalline oxide particles with dimensions varying between a few nanometres and a few tens of nanometres takes place. The dimensions of the particles are controllable both on the basis of the residence time of the reagents under the action of the laser beam and on the basis of the power of the laser. The residence time is in turn adjustable by modifying the flow rate of the reagents, of the sensitizer, of the inert gas used as a carrier and the laser beam's section.

Laser pyrolysis has already been applied in the production of TiO₂ and mixed oxides Ti₁₋ₓVₓO₂, as disclosed in BE N° 417538 and in the European Patent application n° 92109335.7 in which the chemical precursors used are alcoxides of titanium and alcoxides of vanadium; these precursors do not require co-reagents because their molecules contain both the Ti (or V) atoms and the oxygen atoms required for the oxide synthesis. Because these precursors do not absorb in resonance the laser radiation, it is necessary to add a sensitizer gas (C₂H₄ or SF₆) to absorb the laser energy and transfer it by collision to the reagents.

The use of metal chlorides as chemical precursors of the oxides, instead requires the co-presence of a precursor to supply the oxygen. Moreover, also the TiCl₄ only exhibits a mild absorption of the CO₂ laser radiation and it is therefore necessary to add a sensitizer to the reagents in order to obtain an efficiency close to 100%.

The simplest and most economical co-reagent is gaseous oxygen; however, when within the laser pyrolysis it is mixed, for example, with TiCl₄ in the presence of the sensitizers SF₆ or C₂H₄, the quality of the resulting powders is much worse compared to powders obtained by the pyrolysis of titanium alcoxides. In fact, when using SF₆ as a sensitizer, the pyrolysis reaction of TiCl₄ does not take place completely under the action of the laser beam and intermediate halogenated compounds are formed that are unstable and strongly hygroscopic. When instead the sensitizer C₂H₄ is mixed with TiCl₄ and O₂, under the action of the laser beam a combustion reaction takes place that causes an uncontrollable and non-uniform increase in the reaction temperature.

Moreover, the reaction flame is discontinuous and unstable giving way to reaction efficiency far below 100% (see document WO 89/04717). Consequently, the synthesized TiO₂ particles are scarcely uniform in size, have high average dimensions and feature different crystalline phases.

The purpose of the present invention is to allow the use of metal chlorides in the laser pyrolysis process to produce nanometric powders of a quality at least equal to powders obtained by means of laser pyrolysis of alcoxides.

The invention lies in the fact that oxygen precursors that originate a controlled laser pyrolysis of metal chlorides, with 100% efficiency, also in presence of a combustible sensitizer, have been found and experimented.

Since the metal alcoxides are chemically synthesized from the reaction of the corresponding chlorides with alcohol, vapours of metal chlorides and vapours of an alcohol (for example ethyl, methyl, isopropyl) are pre-mixed and carried into the reaction chamber. Hence a new oxide powders synthesis mechanism is realized characterized in that, during the brief transit times under the action of the laser beam (variable between a few milliseconds and a few tens of milliseconds), some alcoxides are formed and subsequently undergo a pyrolysis process.

This new mechanism can be applied both to the synthesis of simple oxides and to that of mixed oxides of two or more metals or to composites of various oxides, simultaneously carrying the vapours of the corresponding chlorides, whether they are in the liquid form or in solid form at ordinary conditions.

The basic advantage of the invention is of an economic kind, mainly arising from the possibility of using metal chlorides as precursors for the synthesis of high quality nanometric powders, the commercial cost of metal chlorides being at least 10 times less than that of corresponding alcoxides.

Another advantage is linked to the higher vapour pressures of the chlorides compared with the alcoxides which allows the reduction of the energy consumption required to obtain their vaporization.

Moreover, the possibility of increasing the flow rate of the sensitizer, without any direct combustion problems, allows to achieve maximum absorption of the laser radiation exploiting all the energy and hence further reducing the production costs.

The abatement of production costs determined by all these factors makes the laser pyrolysis process more competitive compared with conventional vapour phase processes, drastically increasing the quality/price ratio of the product.

In addition, the high thermal stability of the chlorides allows their massive vaporization through the direct heating of the liquid streams (0.5-10 l/h) at temperatures higher than boiling point (100-300°C) and this allows to scale up the process to productivity levels far higher than those of alcoxides exploiting the energy of a high power laser (1-15 kW). Alcoxides instead feature decomposition temperatures close to boiling temperatures and therefore the transport of vapours into the reaction chamber must be performed by bubbling a carrier gas at a temperature far lower than boiling point so as to avoid the formation of solid polymer compounds resulting from the thermal decomposition of the alcoxides; this limits the yield of the chemical reaction and allows the transport of small quantities of vapours.

With the purpose of illustrating the invention some examples concerning the production process and the characteristics of the produced powders are reported below.

### Example N° 1

To produce TiO₂ powders from TiCl₄ and isopropyl alcohol:
vapours of TiCl₄ are carried by a flow of Argon (300 sccm) that bubbles in a thermo-stat bottle in which the temperature of the liquid is kept at 80°C; at the same time a flow of Argon (200 sccm) carries vapours of isopropyl alcohol from another thermo-stat bottle in which the temperature of the liquid is kept at 70°C. The mixture of vapours of the two co-reagents is therefore added to a stream of C₂H₄ (1500 sccm) and Argon (700 sccm) and injected, through a rectangular nozzle (3mm x 10mm), into a reaction chamber where the pressure is kept at a constant value of 500 mbar. The irradiation of the gaseous stream by a continuous emission CO₂ laser beam (400 watt, section diameter 8 mm.) gives place, during a transit time of the reagents under the laser beam of 5.3 msec., to a pyrolysis reaction with an absorption of the laser beam equal to 100 watts, efficiency of 100% and productivity 21 g/h of TiO₂ powders. The powders calcinated in air at 400°C for three hours are exclusively constituted by the anatase crystalline phase, have a specific surface area of 122 m²/g and an average dimension of the particles less than 120 Å.

### Example N° 2

To produce powders of mixed oxides from a mixture of TiCl₄, VOCl₃ and isopropyl alcohol:
vapours of a mixture of TiCl₄ and VOCl₃ are carried by a flow of Argon (100 sccm) that bubbles in a thermo-stat bottle in which the temperature of a liquid mixture constituted by 99% TiCl₄ and 1% of VOCl₃ is kept at 80°C. The complete miscibility and the very close vapour pressures of the two liquids ensures that the chemical composition of the vapour phase is the same as that of the liquid phase. At the same time a flow of Argon (700 sccm) carries vapours of isopropyl alcohol from another thermo-stat bottle in which the temperature of the liquid is kept at 70°C. The mixture of co-reagents is then added to a stream of C₂H₄ (1000 sccm) and injected, through a rectangular nozzle (3mm x 10mm), into a reaction chamber where the pressure is kept at a constant value of 500 mbar. The irradiation of the gaseous stream by a continuous emission CO₂ laser beam (400 watt, section diameter 8 mm.), gives place, during a transit time of the reagents under the laser beam of 5.3 msec., to a pyrolysis reaction with an absorption of the laser beam equal to 90 watts, efficiency of 100% and productivity 35 g/h of mixed Ti₍₁₋ₓ₎VₓO₂ oxide powders, with x=0.01. The powders calcinated in air at 400°C for three hours are exclusively constituted by the anatase crystalline phase, have a specific surface area of 100 m²/g and an average dimension of the particles less than 140 Å. The use of mixtures of TiCl₄ and more than 10% VOCl₃ leads to the formation of powders of TiO₂ and V₂O₅ and not to substitutional mixed oxides, due to the limits in the solid solubility of Vanadium in TiO2.

### Example N° 3

To produce TiO₂ powders from TiCl₄ and isopropyl alcohol by means of direct vaporization of the liquid streams in a high productivity plant equipped with a 2000 watt CO₂ laser, defined as high power in relation to the field of application:

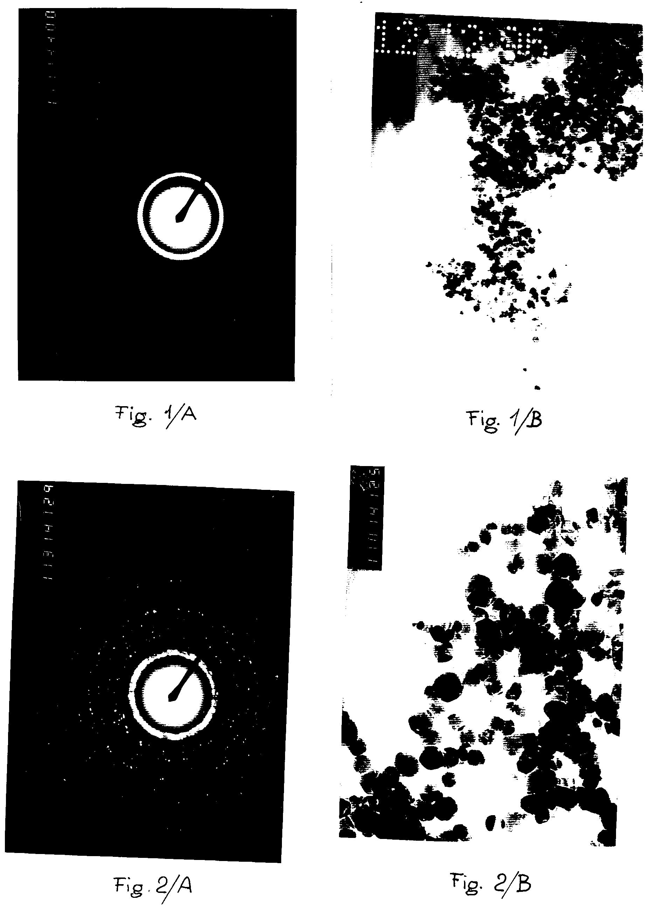

A 275 cc/hour flow of TiCl4 is massively evaporated by feeding it through a coil kept at the temperature of 160°C; at the same time a 1000 cc/hour flow of isopropyl alcohol is evaporated by feeding it in another coil kept at a temperature of 100°C. The mixture of the two co-reagents vapours is hence added to a stream of C2H4 (4000 sccm) and Argon (9000 sccm) and injected, through a circular nozzle (d = 2 mm), into a reaction chamber where the pressure is kept at the constant value of 500 mbar. The irradiation of the gaseous stream by the continuous emission CO2 laser beam (2000 watts, with a rectangular section of 2 x 3 cms.), gives place, during a transit time of the reagents under the laser beam of 37 msec., to a pyrolysis reaction with an absorption of the laser power equal to 500 watts, reaction efficiency of 100% and productivity 200 g/h of mixed TiO₂ powders. The powders calcinated in air at 400°C for three hours are exclusively constituted by the anatase crystalline phase as shown by the electronic diffraction rings in Fig. 1/A, and have a specific BET surface area of 128 m²/g. Moreover the TEM image shown in Fig. 1/B has highlighted good size uniformity with particle dimensions less than 120 Å.

### Reference example N° 1

To produce TiO₂ from TiCl₄ and O₂:

TiCl4 vapours are carried by a flow of Argon (150 sccm) that bubbles in a thermo-stat bottle in which the temperature of the liquid is maintained at 100°C; the vapours are then added to a stream of C₂H₄ (300 sccm) and O₂ (90 sccm) and injected, through a rectangular nozzle (3mm x 10mm), into a reaction chamber where the pressure is kept at a constant value of 500 mbar. The irradiation of the gaseous stream by the continuous emission CO₂ laser beam (400 watts, section diameter 8 mm.), gives place, during a transit time of the reagents under the laser beam of 26 msec., to a pyrolysis reaction characterized by a discontinuous flame at high temperature (1250°C), with an absorption of the laser beam equal to 23 watts, a low reaction efficiency and productivity 12 g/h of TiO₂ powders. The powders calcinated in air at 400°C for three hours are characterized by a specific surface area equal to 45 m²/g. The analysis of the electronic diffraction image shown in Fig. 2/A, highlights that the powders are constituted by a mixture of 50% of the two crystalline phases, anatase and rutile, while the TEM image shown in Fig. 2/B highlights the sharp worsening of the morphological characteristics of the powders when compared to those produced in Example 2 (Fig. 1). In fact these exhibit poor size uniformity and particle dimensions greater than 450 Å. All the attempts made in order to increase hourly productivity (by increasing the flow rate of Argon for the transport of vapours and the temperature of the liquids) and/or the specific surface area (by reducing the transit times) have originated powders with worse morphological characteristics and with low reaction yields.

### Reference example N° 2

To produce TiO2 powders from titanium isopropoxide:

Vapours of Ti isopropoxide are carried by a flow of Argon (2000 sccm) bubbling in a thermo-stat bottle in which the temperature of the liquid is kept at 110°C; the vapours are then added to a stream of C₂H₄ (700 sccm) and injected, through a rectangular nozzle (3 mm x 10 mm), into a reaction chamber where the pressure is kept at a constant value of 500 mbar. The irradiation of the gaseous stream by a continuous emission CO₂ laser beam (400 watt, section diameter 8 mm.), gives place, during a transit time of the reagents under the laser beam of 5.3 msec., to a pyrolysis reaction with an absorption of the laser beam equal to 80 watts, efficiency of 100% and productivity 24 g/h of mixed TiO₂ powders. The powders calcinated in air at 400°C for three hours are characterized by a specific surface area equal to 105 m²/g and particle dimensions a little larger than 140 Å.

The most important process parameters and the characteristics of the powders, related to the examples reported are compared in the table below.

**TABLE**

| PRECURSORS | tₜᵣ (msec) | Q (g/h) | P₀ (W) | Pₐₛₛ (W) | S (m²/g) | Crystalline structure |
|---|---|---|---|---|---|---|
| 1-TiCL₄+A.I. | 5.3 | 21 | 400 | 100 | 122 | a |
| 2-TiCl₄+VOCI₃ | 5.3 | 35 | 400 | 90 | 110 | a |
| 3-TiCl₄+A.I. | 37 | 200 | 2000 | 500 | 128 | a |
| rif.1 TiCl₄+O₂ | 26 | 12 | 400 | 23 | 45 | a + r |
| rif.2 Ti(OCH(CH₃)₂)₄ | 5.3 | 24 | 400 | 80 | 105 | a |
| - tₜᵣ = reagents' transit time under the laser beam - Q = hourly productivity - P₀ = power of the incident laser beam - P_{ass.} = laser power absorbed by the stream of reagents - S = specific surface area of powders - a = anatase crystalline structure - r = rutile crystalline structure - I.A. = isopropyl alcohol - Ti(OCH(CH₃)₂)₄ = titanium isopropoxide | | | | | | |

## Claims

1. A process for producing nanometric powders of metal oxides from metal chlorides by means of a continuous emission CO₂ laser with adequate power as a source of energy for the pyrolysis reaction of the chemical precursors **characterized** in that vapours of metal chlorides are mixed with vapours of an alcohol and carried into a reaction chamber under the action of the laser beam so as to form the corresponding alcoxides that subsequently undergo a pyrolysis process and that the particles of produced powders are well crystallized and with diameters ranging between 5 and 20 nm.

2. A process according to claim 1 characterized in that a single solid or liquid metal chloride is vaporized and the produced powders are particles of a simple oxide.

3. A process according to claim 1 characterized in that different liquid or solid metal chlorides are vaporized and mixed and that the produced powders are particles of mixed oxides the composition of which is determined by the molar ratio of the above said vapours of said mixtures within the solubility range of the metals in said oxides.

4. A process according to claim 1 characterized in that different liquid or solid metal chlorides are vaporized and mixed and that the produced powders are composites constituted by particles of various metal oxides, when the proportion of the components of the vapour mixture exceeds the solubility limits of the involved metals in said oxides.

5. A process according to the previous claims characterized in that the vapours of liquid or solid metal chlorides and of the co-reagent alcohols are vaporized directly from the liquid or solid phases, are mixed to high flow rates of a sensitizer and irradiated by high power CO₂ laser to produce high quantities of powders with a 100% efficiency.
